# EUROPEAN PATENT APPLICATION

(11) **EP 3 007 488 A1**
(43) Date of publication of application: **13.04.2016**
(21) Application number: 14306582.9
(22) Date of filing: 08.10.2014
(51) Int. Cl.: H04W 36/12

(54) **Handling of pdn connections for a user equipment in a mobile network at network initiated reselection of a serving core network entity**

(71) Applicant: ALCATEL LUCENT, 92100 Boulogne-Billancourt (FR)
(72) Inventor: Drevon, Nicolas, 91620 NOZAY (FR); Thiebaut, Laurent, 91620 NOZAY (FR); Godin, Philippe, 91620 NOZAY (FR)
(74) Representative: El Manouni, Josiane

(57) **Abstract**

An embodiment is a method for handling PDN connections for a User Equipment UE in a mobile network, at network initiated reselection of a Core Network CN entity serving said UE, from a CN entity referred to as serving CN entity to a CN entity referred to as dedicated CN entity, such as CN entity in a dedicated Core Network, said method comprising:
- deactivation, with reactivation requested, of those of said PDN connections for which a corresponding PDN Gateway PDN GW needs to be changed, while keeping alive those of said PDN connections for which a corresponding PDN Gateway PDN GW does not need to be changed.

## Description

The present invention generally relates to mobile communication networks and systems.

Descriptions of mobile networks and systems can be found in the literature, such as in particular in Technical Specifications published by standardization bodies such as for example 3GPP (3^{rd} Generation Partnership Project).

An example of 3GPP mobile system is EPS (Evolved Packet System). An EPS network comprises a Core Network CN, called EPC (Evolved Packet Core) that can be accessed via a Radio Access Network RAN such as E-UTRAN. EPS is specified in particular in 3GPP TS 23.401.

In a system such as EPS, a User Equipment (UE) has access to at least one external IP network (also referred to as Packet Data Network PDN), via an EPS network providing IP connectivity (also referred to as PDN connectivity). Examples of PDNs include: Internet, Intranet, Operator's IP network e.g. IMS network, ...etc.

A PDN connection is defined as an association between a UE represented by one IPv4 address and/or one IPv6 prefix and a PDN represented by a PDN identifier called APN. PDN connectivity is provided via an EPC entity or node called PDN Gateway PDN GW. Control plane functions including PDN connection management (PDN connection establishment,...etc) are provided by an EPC entity or node referred to as serving EPC entity, called Mobility Management Entity (MME).

There may be similar concepts in systems other than EPS.

Architectural enhancements for dedicated core networks are in the process of being specified, in particular for 3GPP networks (see for example 3GPP TR 23.707).

As recognized by the inventors and as will be explained with more detail later, there is a need to improve the handling of PDN connections for a User Equipment UE at network initiated reselection of a serving Core Network entity (e.g. MME in EPC), such as at reselection of a serving Core Network entity in a dedicated Core Network. More generally there is a need to improve users' experience in such networks and systems. Embodiments of the present invention in particular address such needs.

These and other objects are achieved, in one aspect, by a method for handling PDN connections for a User Equipment UE in a mobile network, at network initiated reselection of a Core Network CN entity serving said UE, from a CN entity referred to as serving CN entity to a CN entity referred to as dedicated CN entity, such as CN entity in a dedicated Core Network, said method comprising:
- deactivation, with reactivation requested to the UE, of those of said PDN connections for which a corresponding PDN Gateway PDN GW needs to be changed, while keeping alive those of said PDN connections for which a corresponding PDN Gateway PDN GW does not need to be changed.

These and other objects are achieved, in other aspects, by entities for performing related step(s) of such method, said entities including, in particular (though not exclusively), CN entity capable of serving a User Equipment, such as Mobility Management Entity MME.

Some embodiments of apparatus and/or methods in accordance with embodiments of the present invention are now described, by way of example only, and with reference to the accompanying drawings, in which:

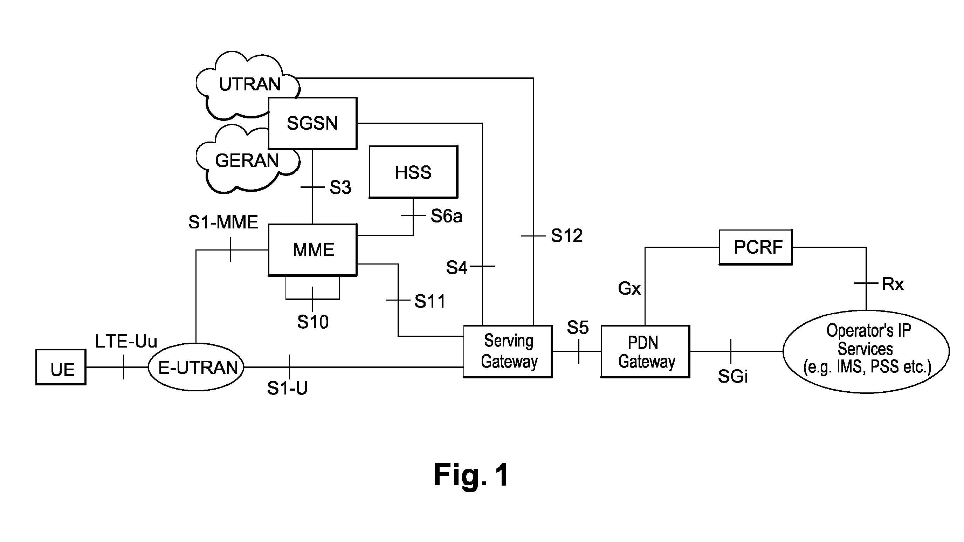

- Figure 1 is intended to recall an example of EPS architecture,
- Figure 2 is intended to illustrate a first example of signaling flow according to embodiments of the invention,
- Figure 3 is intended to illustrate a second example of signaling flow according to embodiments of the invention.

3GPP networks are beginning to support devices and customers with very different characteristics, such as machine type devices, MVNO, data usage, etc. These classes of devices and customers may have different requirements from the core-network in terms of optional feature support, traffic characteristic support, availability, congestion management, ratio of signalling to user plane traffic, etc. One cost effective mechanism for operators to support these different classes of devices and customers is to create separate dedicated core networks consisting of specialized core network elements that are designed and deployed to meet the requirements of these different devices and customers.

A work has been started at 3GPP, documented in http://www.3gpp.org/ftp/tsg sa/TSG SA/TSGS 64/Docs/SP-140228.zip and http://www.3gpp.org/DynaReport/23707.htm.

Various solutions were proposed for the move of the control of a UE from a serving MME, the UE having PDN connections established via PDN GWs (selected by the serving MME), towards another MME which requires to re-route the UE traffic of one or more established PDN connections through dedicated PDN GW(s) that are different from the PDN GWs used for the established PDN connections.

The requirement stated in 3GPP TR 23.707 clause 5.2.4.1, which is to move the UE control from a non-dedicated network to a dedicated network "With minimal impact on network and the user's experience, the subscribers should be off-loaded within a reasonable amount of time" needs to be satisfied.

The move of UE control could also be from a dedicated network to another dedicated network or to a non-dedicated network.

All the solutions propose to send a standard NAS DETACH REQUEST message to the UE, with Detach type IE indicates "re-attach required". In the case at least one PDN connection for which the PDN GW needs to be changed, such solutions result in the release of all the PDN connections established with the UE, and the UE initiated re-establishment of new PDN connections to the same APN, and the re-allocation of a new IPv4 address / IPv6 prefix for all the PDN connections.

If the user, when controlled by the first MME, had at least two PDN connections : at least one for which the PDN GW does not need to be changed, and at least one PDN connection for which the PDN GW needs to be changed, and if the user was in the middle of a banking transaction with an https session on the default APN (Internet), that https session will be broken at the move of the control to the new MME.

There is a need for another approach, in particular avoiding such drawbacks.

By way of example, the description below will be made for an EPS network. It should however be understood that embodiments of the present invention are not limited to the example of an EPS network.

One or more of following aspects and/or embodiments may be provided.

Instead of detaching the UE, the PDN connections that don't need PDN GW change are seamlessly handed over or moved, and the PDN connections that need PDN GW change are deactivated with reactivation requested.

For the handover-based solution, depicted in the contribution S2-142549 http://www.3gpp.org/ftp/tsg sa/WG2 Arch/TSGS2 104 Dublin/Docs/S2-142549.zip, one or more of following steps may be provided :
- The source (serving) MME sends to the target (new) MME a Forward Relocation Request message with a new cause value = HO triggered by CN, and an indication of which PDN connections will be removed by the source (Serving) MME when the UE control moves to the dedicated network, so that the dedicated MME only establishes the PDN connections that will not be removed by the source (Serving) MME.
- After the acknowledged reallocation of the GUTI, the target (new) MME notifies the old MME with the fact that the Relocation has completed (existing Forward Relocation Complete Notification message). This triggers the old MME to deactivate PDN connections for which the PDN GW needs to be changed,by
   o sending NAS Deactivate EPS Bearer Context Request with reactivation requested to the UE, then
   o upon receiving E-RAB Release Response for the last bearer of a PDN connection, the source (old) MME deletes the network resources in SGW and PDN GW of the corresponding PDN connections by sending Delete Session Request to the SGW, which relays it to the PDN GW, and
- As the UE has received NAS Deactivate EPS Bearer Context Request with reactivation requested after the relocation has completed (after the new MME has taken control), the UE attempts to re-activate the PDN connections are handled by the new MME that can allocate PDN GW corresponding to the dedicated network.
- PDN connections that don't need PDN GW change are handed over with IP address preservation: the IP address of the UE on these PDN connections is preserved.

For TAU-based solutions, one or more of following steps may be provided:
- Upon receiving the Context Request message from the target (new) MME during the TAU procedure, the source (old) MME verifies for each PDN connection whether the PDN GW needs to be changed. For the PDN connections for which the PDN GW needs to be changed:
   o The source (old) MME deletes the network resources towards the SGW and PGW by sending a Delete Session Request to the SGW,
   o The source (old) MME indicates in the Context Request Ack with an indication of which PDN connections need to be released;
- After the completion of the TAU procedure, the target (new) MME deactivates PDN connections for which the PDN GW needs to be changed, with a request for the UE to reactivate it, by sending NAS Deactivate EPS Bearer Context Request with reactivation requested to the UE.

PDN connections that don't need PDN GW change are moved during the TAU procedure: the IP address of the UE on these PDN connections is preserved.

More detailed aspects and/or embodiments of the handover-based solution, called "MME triggered S1 handover in case the PDN GW need to be changed for one or more PDN connections", are now described.

Note: The term serving MME will also be used in the following instead of the term old MME, and the term dedicated MME will also be used in the following instead of the term new (target) MME.

This solution is based on solution 4, which principles are described in clause 5.2.1.1.1.2.x of 3GPP TR 23.707 [in which solution from document S2-142549 is captured] by which a new message to the S1-MME interface is introduced that allows the MME to trigger a S1 based handover for a UE without changing the serving cell.

The serving MME checks for each established PDN connection whether the corresponding PDN GW needs to be changed when the UE is to be assigned to a dedicated network. This is performed via a query related with the target dedicated network from the serving MME (usually in the non-dedicated network) to an EPC DNS server. The serving MME can determine whether a PDN GW needs to be changed by checking whether the current PDN GW FQDN or IP address is in the list of PDN GWs FQDN or IP addresses provided in the DNS response.

The principle is that, instead of detaching the UE, the PDN connections that don't need PDN GW change are seamlessly handed over and the PDN connections that need PDN GW change are deactivated with reactivation requested:
- The source (serving) MME sends to the target (new) MME a Forward Relocation Request message with a new cause value = HO triggered by CN, and an indication of which PDN connections will be removed by the source (Serving) MME when the UE control moves to the dedicated network, so that the dedicated MME only establishes the PDN connections that will not be removed by the source (Serving) MME.
- After the acknowledged reallocation of the GUTI, the target (new) MME notifies the source (old) MME with the fact that the Relocation has completed (existing Forward Relocation Complete Notification message). This triggers the source (old) MME to deactivate PDN connections for which the PDN GW needs to be changed, by
   o sending NAS Deactivate EPS Bearer Context Request with reactivation requested to the UE, then
   o upon receiving E-RAB Release Response for the last bearer of a PDN connection, the source (old) MME deletes the network resources in SGW and PDN GW of the corresponding PDN connections by sending Delete Session Request to the SGW, which relays it to the PDN GW, and
- As the UE has received NAS Deactivate EPS Bearer Context Request with reactivation requested after the relocation has completed (after the new MME has taken control), the UE attempts to re-activate the PDN connections are handled by the new MME that can allocate PDN GW corresponding to the dedicated network.
- PDN connections that don't need PDN GW change are handled as described in clause 5.2.1.1.1.2.x [in which solution from S2-142549 is captured].

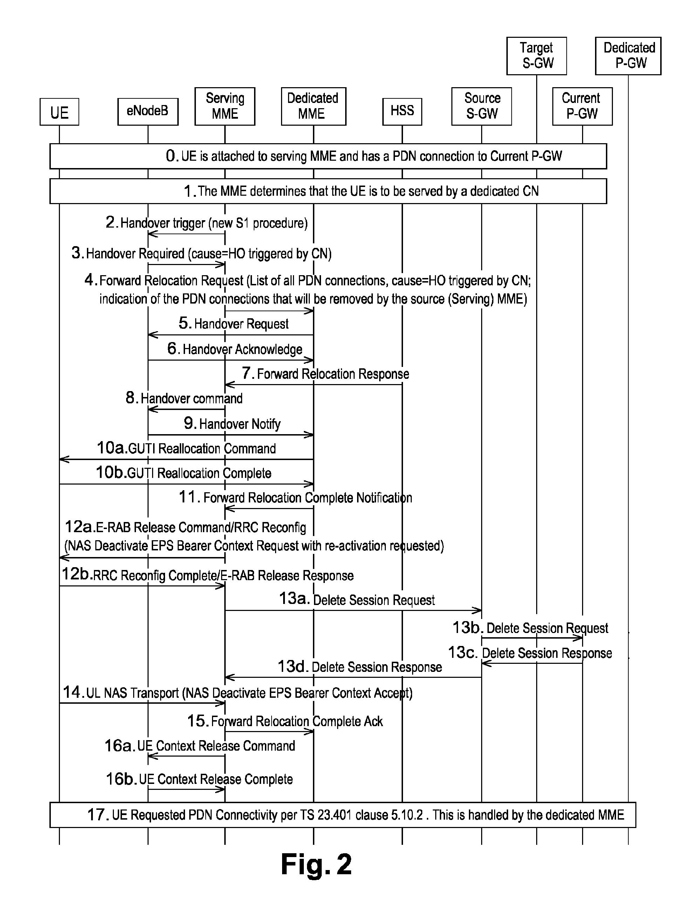

An example of signaling flow for this handover-based solution is illustrated in figure 2.

One or more of following steps, illustrated in figure 2, may be provided:
0. The UE is attached to the serving MME and has PDN connectivity.
1. The serving MME determines that a dedicated (new) MME need be selected (Note: this functionality is common to all solutions and need be concluded separately).
2. The serving MME sends Handover Trigger (new S1AP message) to the eNodeB
3. The eNodeB initiates a handover to itself into the current serving cell and sends Handover Required with a new cause value = HO triggered by CN.
4. The serving MME selects a dedicated MME, checks via DNS whether the same PGW can be reused for each established PDN connection. The Serving MME then sends a Forward Relocation Request to the dedicated MME with a new cause value = HO triggered by CN, and an indication of which PDN connections will be released by the source (Serving) MME when the UE control moves to the dedicated network..
   The dedicated MME verifies whether the Serving GW can continue to serve the UE. If not, it selects a new Serving GW. The dedicated MME only send Create Session Request to the (new) Serving GW for the PDN connections that will not be released by the source (Serving) MME when the UE control moves to the dedicated network.
5. The dedicated MME sends Handover Request to the eNodeB.
6. The eNodeB sends Handover Acknowledge to dedicated MME. This contains no signalling (HO command) targeting the UE (as the UE is served by the same eNodeB as before)
7. The dedicated MME sends Forward Relocation Response to the serving (source) MME.
8. The serving (source) MME sends Handover command to the eNodeB. No signalling is sent to the UE as the UE is served by the same eNodeB as before.
9. The eNodeB sends Handover Notify to the dedicated MME.
10. The dedicated MME performs GUTI re-allocation. After this point NAS messages from UE are handled by dedicated MME.
11. The dedicated MME sends a Forward Relocation Complete Notification to the serving MME, which replies with Forward Relocation Complete Ack.
12. The serving MME sends a NAS Deactivate EPS Bearer Context Request with a list of bearers to deactivate with reactivation requested embedded in a S1AP E-RAB Release Command. The eNodeB performs the corresponding bearer reconfigurations towards the UE and replies to the serving MME by sending E-RAB Release Response.
13. Upon receiving E-RAB Release Response for the last bearer of a PDN connection, the serving MME deletes the corresponding PDN connections by sending Delete Session Request to the SGW with a request to forward the Delete Session Request message to the PGW.
14. The UE acknowledges the NAS Deactivate EPS Bearer Context procedure.
15. The dedicated MME sends a Forward Relocation Complete Notification to the serving MME, which replies with Forward Relocation Complete Ack. NOTE: This step may take place anytime after step 11
16. The serving MME sends UE Context Release Command in order to release the old S1 connection. The eNodeB replies with UE Context Release Complete.
17. The UE reactivates the deactivated PDN connections as specified in TS 23.401 clause 5.10.2. This is handled by the dedicated MME

More detailed aspects and/or embodiments of the handover-based solution, called "Combination of S1 Release with Load balancing TAU and PDN connection deactivation with reactivation required", are now described.

The serving MME checks for each established PDN connection whether the corresponding PDN GW needs to be changed when the UE moves to the dedicated network or not. This is performed via a query from the serving MME (usually in the non-dedicated network) to the DNS server that is used by the dedicated MME for PDN GW selection. The serving MME can determine whether a PDN GW needs to be changed by checking whether the current PDN GW FQDN or IP address is in the list of PDN GWs FQDN or IP addresses provided in the DNS response.

The principle is that, instead of detaching the UE, the PDN connections that don't need PDN GW change are moved with their IP address preserved and the PDN connections that need PDN GW change are deactivated with reactivation requested during the mobility management procedure:
- Upon receiving the Context Request message from the target (new) MME during the TAU procedure, the source (old) MME verifies for each PDN connection whether the PDN GW needs to be changed. For the PDN connections for which the PDN GW needs to be changed:
   o The source (old) MME deletes the network resources towards the SGW and PGW by sending a Delete Session Request to the SGW,
   o The source (old) MME indicates in the Context Request Ack with an indication of which PDN connections need to be released;
- After the completion of the TAU procedure, the target (new) MME deactivates PDN connections for which the PDN GW needs to be changed, with a request for the UE to reactivate it, by sending NAS Deactivate EPS Bearer Context Request with reactivation requested to the UE.
- PDN connections that don't need PDN GW change are moved during the TAU procedure: the IP address of the UE on these PDN connections is preserved.

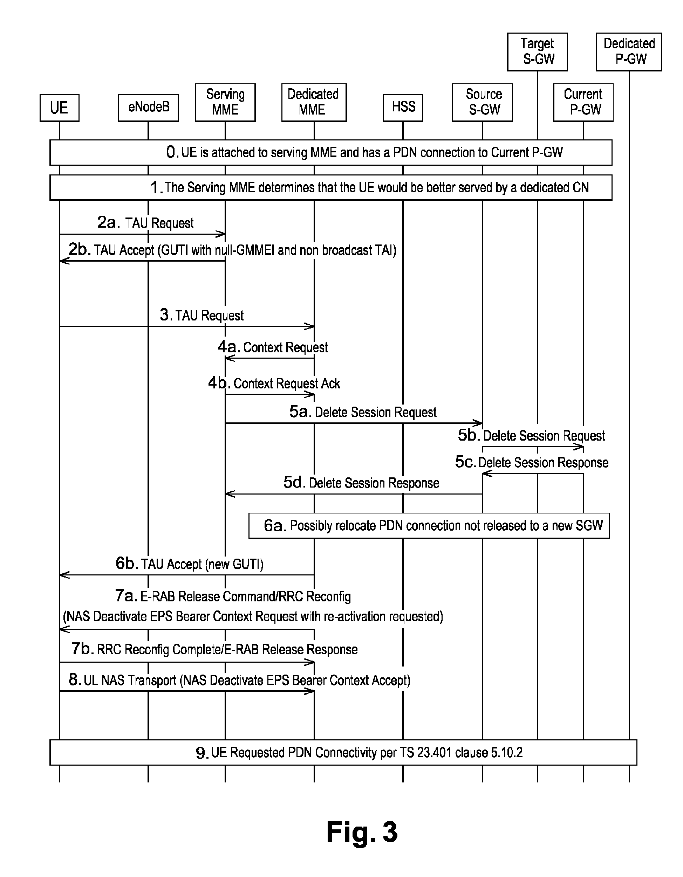

An example of signaling flow for this TAU-based solution is illustrated in figure 3.

One or more of the following steps illustrated in figure 3, may be provided:
0. The UE is attached to the serving MME and has PDN connectivity.
1. The serving MME has determined that a dedicated (new) MME need be selected (Note: this functionality is common to all solutions and need be concluded separately).
2. The UE initiates a TAU procedure. The MME accepts the procedure, and based on the updated UE profile info, the MME allocates a GUTI with a "null-MMEGI" in order to redirect the UE to a dedicated network. The MME may also provide a non-broadcast TAI, and/or a short periodic timer.
3. At the next TAU Request from the UE, the eNodeB forwards the NAS message to a dedicated MME based on the "null-MMEGI" in the RRC message.
4. The dedicated MME fetches (Context Request) the UE context from the old (non-dedicated) MME using the MME code in the GUTI. The serving MME checks via DNS whether the same PDN GW can be reused for each established PDN connection when moving to the dedicated network. The serving MME answers to the dedicated MME by sending Context Request Ack, which contains all PDN connections of the UE and an indication of which PDN connections need to be deactivated, with reactivation requested, when the UE control moves to the dedicated network as they require a change of PDN GW.
5. For each PDN connection that requires a change of PDN GW, the serving MME deletes the session towards the PDN GW.
   NOTE: Step 5 may take place in parallel with steps 6 and next.
6a. The dedicated MME determines whether the serving GW needs to be changed and if it needs to be changed it sends to the selected new Serving GW a Create Session Request (IMSI, bearer contexts, MME Address and TEID, Type, the Protocol Type over S5/S8, RAT type, Serving Network, UE Time Zone) message per PDN connection that is not indicated as to be released as the UE moves to the dedicated network.
6b. Steps 9 to 19 of figure 5.3.3.1-1 in TS 23.401 clause 5.3.3.1 are performed. The dedicated MME then sends TAU Accept to the UE per step 20 of figure 5.3.3.1-1 in TS 23.401 clause 5.3.3.1.
   Step 7, 8 and 9 take place for each PDN connections that needs to be released as the UE moves to the dedicated network.
7. The dedicated MME sends a NAS Deactivate EPS Bearer Context Request with a list of bearers to deactivate with reactivation requested embedded in a S1AP E-RAB Release Command. The eNodeB performs the corresponding bearer reconfigurations towards the UE and replies to the dedicated MME by sending E-RAB Release Response.
8. The UE acknowledges the NAS Deactivate EPS Bearer Context procedure.
9. The UE reactivates the deactivated PDN connections as specified in TS 23.401 clause 5.10.2.

In one aspect, there is provided a method for handling PDN connections for a User Equipment UE in a mobile network, at network initiated reselection of a Core Network CN entity serving said UE, from a CN entity referred to as serving CN entity to a CN entity referred to as dedicated CN entity, such as CN entity in a dedicated Core Network.

Various embodiments are provided, which may be taken alone or in combination, according to various combinations, including (though not limited to) following embodiments.

In an embodiment, said method comprises:
- deactivation, with reactivation requested to the UE, of those of said PDN connections for which a corresponding PDN Gateway PDN GW needs to be changed, while keeping alive those of said PDN connections for which a corresponding PDN Gateway PDN GW does not need to be changed.

In an embodiment, said method comprises:
- handing over with IP address preservation those of said PDN connections for which a corresponding PDN Gateway PDN GW does not need to be changed, said handing over including a relocation procedure of said CN entity serving said UE, from said serving CN entity to said dedicated CN entity.

In an embodiment, said method comprises:
- said serving CN entity triggering said deactivation upon completion of said relocation procedure.

In an embodiment, said method comprises:
- said serving CN entity triggering a handover procedure for said UE without change of UE serving cell, including said relocation procedure.

In an embodiment, said method comprises:
- said serving CN entity providing to said dedicated CN entity, during said relocation procedure, an indication of which PDN connections will be released by the said serving CN entity.

In an embodiment, said method comprises:
- said dedicated CN entity such as dedicated MME, upon reception during said relocation procedure of an indication of which PDN connections will be released by the said serving CN entity , only sending a Create Session Request to a Serving Gateway SGW for the PDN connections that will not be released by the said serving CN entity.

In an embodiment, said method comprises:
- moving, during a mobility management procedure such as Tracking Area procedure involving a change of CN entity serving said UE from said serving CN entity to said dedicated CN entity, those of said PDN connections for which a corresponding PDN Gateway PDN GW does not need to be changed, with their IP address preserved.

In an embodiment, said method comprises:
- said dedicated CN entity being selected during said mobility management procedure, based on information provided by said serving CN entity to a RAN entity such as eNB serving said UE during a previous mobility management procedure.

In an embodiment, said method comprises:
- said serving CN entity, for each PDN connection that requires a change of PDN GW, initiating a procedure for deleting network resources towards the PDN GW, and indicating to the dedicated CN entity that the PDN connection has to be deactivated, with reactivation requested, towards the UE.

In an embodiment, said method comprises:
- Upon receiving a Context Request message during a mobility management procedure such as TAU procedure, from a dedicated CN entity such as MME, a serving CN entity such as MME verifying for each PDN connection whether the PDN GW needs to be changed, and for PDN connections for which the PDN GW needs to be changed, the serving entity such as MME deleting the network resources towards the Serving Gateway SGW and the PDN GW by sending a Delete Session Request to the SGW, and indicating in a Context Request Ack to the dedicated CN entity such as MME, which PDN connections have to be deactivated towards the UE, with reactivation requested.

In an embodiment, said method comprises:
- said dedicated CN entity, after completion of said mobility management procedure, initiating the deactivating of PDN connections for which the PDN GW needs to be changed.

In an embodiment, said method comprises:
- said serving CN entity determining, for a PDN connection, whether the corresponding PDN GW needs to be changed.

In an embodiment, said method comprises:
- said serving CN entity determining, for a PDN connection, whether the corresponding PDN GW needs to be changed, via a query related with said dedicated Core Network to a Core Network DNS server.

In an embodiment, said method comprises:
- said serving CN entity determining, for a PDN connection, whether the corresponding PDN GW needs to be changed, by checking whether the current PDN GW FQDN or IP address is in the list of PDN GWs FQDN or IP addresses provided in the DNS response.

In other aspects, there are provided entities for performing related step(s) of such method, said entities including, in particular (though not exclusively): mobile core network entity capable of serving a User Equipment such as Mobility Management Entity MME.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for handling PDN connections for a User Equipment UE in a mobile network, at network initiated reselection of a Core Network CN entity serving said UE, from a CN entity referred to as serving CN entity to a CN entity referred to as dedicated CN entity, such as CN entity in a dedicated Core Network, said method comprising:
- deactivation, with reactivation requested to the UE, of those of said PDN connections for which a corresponding PDN Gateway PDN GW needs to be changed, while keeping alive those of said PDN connections for which a corresponding PDN Gateway PDN GW does not need to be changed.

2. A method according to claim 1, comprising:
- handing over with IP address preservation those of said PDN connections for which a corresponding PDN Gateway PDN GW does not need to be changed, said handing over including a relocation procedure of said CN entity serving said UE, from said serving CN entity to said dedicated CN entity.

3. A method according to claim 2, comprising:
- said serving CN entity triggering said deactivation upon completion of said relocation procedure.

4. A method according to claim 2 or 3, comprising:
- said serving CN entity triggering a handover procedure for said UE without change of UE serving cell, including said relocation procedure.

5. A method according to any of claims 2 to 4, comprising:
- said serving CN entity providing to said dedicated CN entity, during said relocation procedure, an indication of which PDN connections will be released by the said serving CN entity.

6. A method according to any of claims 2 to 5, comprising:
- said dedicated CN entity such as dedicated MME, upon reception during said relocation procedure of an indication of which PDN connections will be released by the said serving CN entity , only sending a Create Session Request to a Serving Gateway SGW for the PDN connections that will not be released by the said serving CN entity.

7. A method according to claim 1, comprising:
- moving, during a mobility management procedure such as Tracking Area procedure involving a change of CN entity serving said UE from said serving CN entity to said dedicated CN entity, those of said PDN connections for which a corresponding PDN Gateway PDN GW does not need to be changed, with their IP address preserved.

8. A method according to claim 7, comprising:
- said dedicated CN entity being selected during said mobility management procedure, based on information provided by said serving CN entity to a RAN entity such as eNB serving said UE during a previous mobility management procedure.

9. A method according to claim 7 or 8, comprising:
- said serving CN entity, for each PDN connection that requires a change of PDN GW, initiating a procedure for deleting network resources towards the PDN GW, and indicating to the dedicated CN entity that the PDN connection has to be deactivated, with reactivation requested, towards the UE.

10. A method according to any of claims 7 to 9, comprising:
- Upon receiving a Context Request message during a mobility management procedure such as TAU procedure, from a dedicated CN entity such as MME, a serving CN entity such as MME verifying for each PDN connection whether the PDN GW needs to be changed, and for PDN connections for which the PDN GW needs to be changed, the serving entity such as MME deleting the network resources towards the Serving Gateway SGW and the PDN GW by sending a Delete Session Request to the SGW, and indicating in a Context Request Ack to the dedicated CN entity such as MME, which PDN connections have to be deactivated towards the UE, with reactivation requested.

11. A method according to any of claims 7 to 10, comprising:
- said dedicated CN entity, after completion of said mobility management procedure, initiating the deactivating of PDN connections for which the PDN GW needs to be changed.

12. A method according to any of claims 1 to 11, comprising:
- said serving CN entity determining, for a PDN connection, whether the corresponding PDN GW needs to be changed.

13. A method according to any of claims 1 to 12, comprising:
- said serving CN entity determining, for a PDN connection, whether the corresponding PDN GW needs to be changed, via a query related with said dedicated Core Network to a Core Network DNS server.

14. A method according to claim 13, comprising:
- said serving CN entity determining, for a PDN connection, whether the corresponding PDN GW needs to be changed, by checking whether the current PDN GW FQDN or IP address is in the list of PDN GWs FQDN or IP addresses provided in the DNS response.

15. A CN entity capable of serving a User Equipment UE, such as Mobility Management Entity MME, configured to perform steps of a method according to any of claims 1 to 14.
